# EUROPÄISCHE PATENTSCHRIFT

(11) **EP 0 855 075 B1**
(45) Veröffentlichungstag und Bekanntmachung des Hinweises auf die Patenterteilung: **06.12.2000**
(21) Anmeldenummer: 96934669.1
(22) Anmeldetag: 12.10.1996
(51) Int. Cl.: G09B 21/00, B41J 3/32, G06F 3/00

(54) **VERFAHREN UND VORRICHTUNG ZUR STEUERUNG VON BRAILLE-ELEMENTEN EINES BRAILLE-FELDES**
METHOD AND DEVICE FOR THE CONTROL OF BRAILLE ELEMENTS IN A BRAILLE FIELD
PROCEDE ET DISPOSITIF DE COMMANDE D'ELEMENTS BRAILLE DANS UN CHAMP BRAILLE

(30) Priorität: 14.10.1995 DE 19538358; 14.10.1995 DE 19538359; 03.04.1996 DE 19613318
(43) Veröffentlichungstag der Anmeldung: 29.07.1998
(73) Patentinhaber: KTS Kommunikationstechnik für Blinde und Sehbehinderte Inh. Annette Hauser-Maier, 73116 Wäschenbeuren (DE)
(72) Erfinder: MAIER, Dietmar, D-73116 Wäschenbeuren (DE)
(74) Vertreter: Leitner, Waldemar, Dr. techn.
(86) Internationale Anmeldenummer: EP9604456
(87) Internationale Veröffentlichungsnummer: WO9715036

(56) Entgegenhaltungen:
- EP-A- 0 284 113
- EP-A- 0 640 948
- DE-A- 4 241 937
- DE-U- 9 111 295
- KIENINGER T ET AL: "HYPERBRAILLE - A HYPERTEXT SYSTEM FOR THE BLIND" 31.Oktober 1994 , ANNUAL CONFERENCE ON ASSISTIVE TECHNOLOGIES, PAGE(S) 92 - 99 XP000574666 siehe Seite 93, Spalte 2, Absatz 4 - Seite 95, Spalte 1, Absatz 1; Abbildung 1

## Beschreibung

Die Erfindung betrifft ein Verfahren zur Steuerung von Braille-Elementen eines Braille-Feldes, bei dem den einzelnen Braille-Elementen des Braille-Feldes Steuersignale zugeführt werden, durch die eine Positionsveränderung von Braille-Stiften eines Braille-Elements bewirkbar ist, sowie eine zur Durchführung des Verfahrens geeignete Vorrichtung.

Ein derartiges Verfahren sowie eine zur Durchführung des bekannten Verfahrens geeignete Vorrichtung sind bekannt. Diese werden z.B. dazu eingesetzt, um blinden Schreibkräften die Texterfassung und Textbearbeitung auf computerunterstützten Textsystemen zu ermöglichen, indem die auf einem Monitor des Textverarbeitungssystems dargestellten Buchstaben zeilenweise auf dem Braille-Feld im Braille-Alphabet dargestellt werden. Hierzu ist vorgesehen, daß der bekannten Vorrichtung die die Klartext-Anzeige der Schriftzeichen auf dem Monitor bewirkenden Signale zugeführt und von dieser in die Schriftzeichen im Braille-Alphabet repräsentierende Steuersignale umgewandelt werden, die dann eine entsprechende Positionierung der Braille-Stifte eines jeden Braille-Elements des Braille-Feldes bewirken.

Nachteilig in dem bekannten Verfahren ist, daß jeweils nur eine einzige Textzeile des Monitors auf dem Braille-Feld darstellbar ist. Um eine andere Textzeile als die aktuelle Textzeile des Monitors darstellen zu können, ist bei dem bekannten Verfahren vorgesehen, daß die Auswahl einer neuen Textzeile des Monitors durch die Betätigung einer Tastenkombination der Tastatur des Textsystems durchgeführt wird. Dies führt in nachteiliger Art und Weise dazu, daß der blinde Benutzer des Textsystems entweder die für die Auswahl einer neuen Zeile erforderliche Tastenkombination auswendig wissen muß, oder daß er sie in umständlicher Art und Weise in einem in Braille-Schrift gehaltenen Handbuch nachschlagen muß. Zusammenfassend zu diesem Aspekt des bekannten Verfahrens ist festzuhalten, daß bei diesem in nachteiliger Art und Weise schon die Auswahl einer neuen, anstelle der aktuellen Textzeile auf dem Braille-Feld darzustellenden Zeile äußerst umständlich und daher - insbesondere für blinde oder sehbehinderte Schreibkräfte - bedienerunfreundlich ist.

Die bei dem bekannten Verfahren auftretende Komplexität bezüglich seiner Durchführung erhöht sich nochmals, wenn eine neue Zeile nicht nur dargestellt werden soll, sondern darüber hinaus auch der Cursor an einer definierten Position der nun auf dem Braille-Feld dargestellten Textzeile positioniert werden soll. Hierzu dienen bei der bekannten Vorrichtung über jedem Braille-Element des Braille-Feldes angeordnete Funktionstasten, wobei beim bekannten Verfahren durch Drücken der n-ten Funktionstaste der Cursor an der Position n der aktuell auf dem Braille-Feld dargestellten Textzeile positioniert wird.

Des weiteren erlaubt das bekannte Verfahren und die bekannte Vorrichtung in nachteiliger Art und Wiese nur die beiden vorstehend beschriebenen Operationen - die Auswahl einer von der aktuellen Textzeile abweichenden neuen Textzeile sowie das Positionieren des Cursors an einer definierten Position der vorher ausgewählten Textzeile. Dies ist insbesondere dann von Nachteil, wenn zur Textverarbeitung moderne Textsysteme, insbesondere auf dem Betriebssystem "Windows" aufbauende Textsysteme, eingesetzt werden, da diese auf dem Monitor eine Reihe von über den bloßen Text hinausgehende Informationen darstellen, deren Beachtung zum effizientem Einsatz des Textsystems erforderlich sind.

Es ist daher Aufgabe der Erfindung, ausgehend von dem bekannten Verfahren und der bekannten Vorrichtung ein Verfahren sowie eine zur Durchführung des erfindungsgemäßen Verfahrens besondere geeignete Vorrichtung zu schaffen, welche sich dadurch auszeichnen, daß die Funktionalität des Braille-Feldes erweitert wird.

Diese Aufgabe wird erfindungsgemäß durch die im Anspruch 1 enthaltenen Merkmale gelöst.

Durch die erfindungsgemäßen Maßnahmen wird in besonders vorteilhafter Art und Weise erreicht, daß den Braille-Elementen des Braille-Feldes eine erhöhte Funktionalität zugeordnet wird. Denn: Mit dem erfindungsgemäßen Verfahren ist man in vorteilhafter Art und Weise nun nicht mehr - wie bei den bekannten Verfahren - darauf beschränkt, auf den Braille-Elementen des Braille-Feldes lediglich zeilenweise die zu einer bestimmten Textzeile eines Monitors gehörigen Schriftzeichens durch eine entsprechende Positionierung der Braille-Schrifte eines jeden Braille-Elements im Braille-Alphabet darzustellen. Vielmehr erlaubt es die erfindungsgemäß vorgesehene Verwendung von zumindest m der n Funktionstasten des dem Braille-Feldes zugeordneten Funktionstasten-Feldes, bei der mittels des im Speicher der Vorrichtung abgelegten Befehlssatzes den m Funktionstasten des Funktionstasten-Feldes eine definierte Funktion zugeordnet wird, daß bei einer Betätigung i-ten Funktionstaste die i-te Textzeile des Monitors auf dem Braille-Feld dargestellt wird, indem nach dem Betätigen dieser Funktionstaste ein entsprechender Funktionsbefehl zu einer zentralen Steuer- und Auswerteeinheit der erfindungsgemäßen Vorrichtung gesendet wird, der bewirkt, daß den Braille-Elementen des Braille-Feldes zur Positionssteuerung ihrer Braille-Stifte diejenigen Steuersignale zugeführt werden, welche den entsprechenden Schriftzeichen des Klartextes der i-ten Textzeile entsprechen. Auf diese Art und Weise ist in besonders einfacher Art und Weise eine Auswahl der auf den Braille-Elementen des Braille-Feldes der erfindungsgemäßen Vorrichtung dargestellten Textzeile des Monitors des Textverarbeitungssystems möglich.

Eine vorteilhafte Weiterbildung der Erfindung sieht vor, daß eine Menge von s Befehlssätzen mit jeweils einer definierten Anzahl von mₛ Befehlen für jeweils mₛ Funktionstasten gespeichert wird, und daß ein bestimmter Befehlssatz über eine Auswahltaste ausgewählt wird. Durch diese erfindungsgemäße Maßnahme ist es in besonders vorteilhafter Art und Weise möglich, infolge der dadurch erzielbaren Mehrfachbelegung der Funktionstasten des Funktionstasten-Feldes die Anzahl der Funktionstasten, die zur Steuerung der auf den Braille-Elementen des Braille-Feldes darzustellenden Braille-Symbole erforderlich sind, zu reduzieren. Außerdem erlaubt es die erfindungsgemäß vorgesehene Auswählbarkeit der den Funktionstasten des Funktionstasten-Feldes zuordbaren Befehlsätzen mittels der erfindungsgemäßen Auswahltaste eine systematische Gliederung der Funktionsbefehle.

Eine vorteilhafte Weiterbildung des erfindungsgemäßen Verfahrens sieht vor, daß der aktuell ausgewählte Befehlssatz für die den Braille-Elementen des Braille-Feldes zugeordneten Funktionstasten des Funktionstasten-Feldes auf den Braille-Elementen taktil erfaßbar dargestellt wird. Eine derartige Maßnahme besitzt den Vorteil, daß die blinden Benutzer nun nicht mehr gezwungen sind, in in Braille-Schrift ausgefertigten Handbücher mühsam suchen zu müssen, um die für die Ausführung eines Funktionsbefehls erforderlichen Funktionstasten oder Tastenkombination herauszusuchen.

Eine weitere vorteilhafte Weiterbildung der Erfindung sieht vor, daß die einer bestimmten Funktionstaste zugeordnete Funktion durch ein taktil erfaßbares Symbol auf dem dieser Funktionstaste zugeordneten Braille-Element des Braille-Feldes dargestellt wird. Durch diese erfindungsgemäße Maßnahme wird in vorteilhafter Art und Weise erreicht, daß der blinde Benutzer besonders rasch über die aktuelle Belegung der den einzelnen Braille-Elementen zugeordneten Funktionstasten ermöglicht wird.

Eine weitere vorteilhafte Weiterbildung der Erfindung sieht vor, daß im Braille-Feld eine Kurzinformation über mindestens eine der den Braille-Elementen des Braille-Feldes zugeordneten Funktionstasten dargestellt wird. Hierdurch wird in besonders vorteilhafter Art und Weise eine den blinden Bediener unterstützende Benutzerführung ausgebildet.

Eine weitere vorteilhafte Weiterbildung der Erfindung sieht vor, daß durch zumindest einer der den Braille-Elementen des Braille-Feldes zugeordneten Funktionstasten eine vorzugsweise kontextabhängige Hilfefunktion zugeordnet ist. Eine derartige Maßnahme besitzt den Vorteil, daß es hierdurch besonders einfach möglich ist, für den blinden Benutzer eine mit der nun aktuell vorzunehmenden Tastenbetätigung korrelierte Unterstützung bereitzustellen.

Eine weitere vorteilhafte Weiterbildung der Erfindung sieht vor, daß durch zumindestens eine der Funktionstasten eine Benutzerführung ausgewählt wird, bei der die vorzugsweise kontextabhängige Anweisungen an den Benutzer akustisch vermittelt werden.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird: Es zeigen:
- Figur 1: eine schematische Perspektivdarstellung eines Ausführungsbeispiels einer Vorrichtung
- Figur 2: eine Draufsicht auf das Ausführungsbeispiel, und
- Figur 3: ein Blockschaltbild einer Steuerungseinrichtung des Ausführungsbeispiels

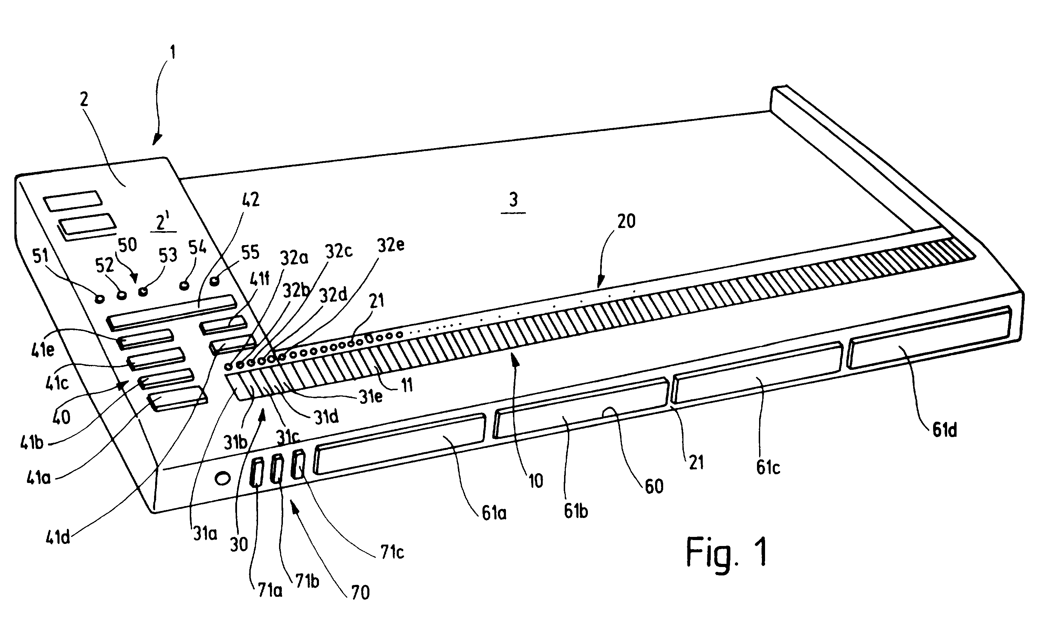

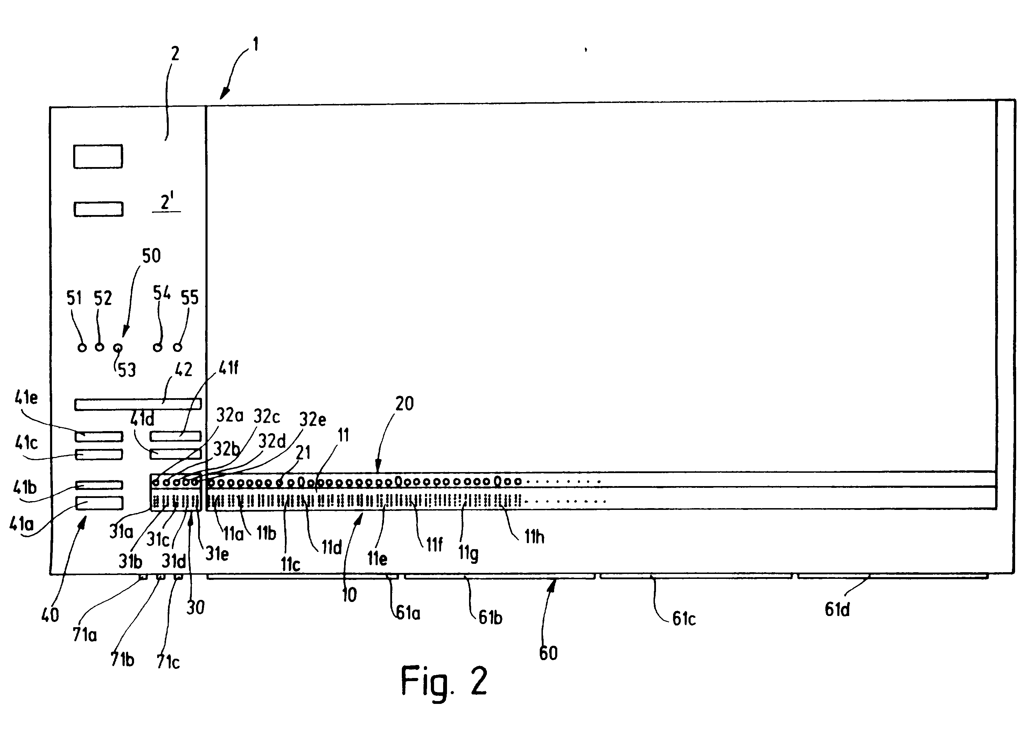

In den Figuren 1 und 2 ist eine Vorrichtung 1 dargestellt, welche besonders zur Durchführung des nachstehend beschriebenen Verfahrens geeignet ist. Die Vorrichtung 1 weist ein Gehäuse 2 auf, in dessen Oberseite 2' eine Ausnehmung 3 vorgesehen ist, in die eine handelsübliche Tastatur einsetzbar ist, über die Daten oder Text in eine Daten- oder Textverarbeitungsanlage (nicht gezeigt) eingebbar ist. Vor dieser Ausnehmung 3 ist ein Braille-Feld 10 und ein Funktionstasten-Feld 20 angeordnet. Das Braille-Feld 10 besteht aus n Braille-Elementen 11, wobei vorzugsweise vorgesehen ist, daß die Anzahl n der Braille-Elemente 11 des Braille-Feldes 10 im wesentlichen gleich der in einer Textzeile des in den Figuren nicht gezeigten Monitors der Daten- oder Textverarbeitungsanlage darstellbaren Symbole ist. Dementsprechend wird bevorzugt, daß 80 Braille-Elemente 11 vorgesehen sind. Das Funktionstasten-Feld 20 weist m Funktionstasten 21 auf, wobei wiederum bevorzugt wird, daß die Anzahl m der Funktionstasten 21 im wesentlichen gleich der Anzahl n der Braille-Elemente 11 ist, so daß vorzugsweise jedem Braille-Element 11 des Braille-Feldes 10 eine definierte Funktionstaste 21 des Funktionstasten-Feides 20 zuordbar ist.

Jedes Braille-Element 11 weist acht Braille-Stifte 11a-11h (siehe Figur 2) auf, die in Abhängigkeit von dem ihrem Braille-Element 11 zugeführten Steuersignal sich auf- und abbewegen, so daß die Symbole des Braille-Alphabets taktil erfaßbar durch die acht Braille-Stifte 11a-11h des Braille-Elements 11 dargestellt werden kennen. Hierbei repräsentiert der erste Braille-Stift 21a den Braille-Punkt 1, der zweite Braille-Stift 11b den Braille-Punkt 4, der dritte Braille-Stift 11c den Braille-Punkt 2, der vierte Braille-Stift 11d den Braille-Punkt 5, der fünfte Braille-Stift 11e den Braille-Punkt 3, der sechste Braille-Stift 11f den Braille-Punkt 6, der siebte Braille-Stift 11g den Braille-Punkt 7 und der achte Braille-Stift 11h den Braille-Punkt 8. Der übersichtlicheren Darstellung halber wurden in Figur 2 die Bezugszeichen für die einzelnen Braille-Stifte 11a-11h bei unterschiedlichen Braille-Elementen 11 eingetragen. Dem Fachmann ist aufgrund des im wesentlichen identischen Aufbau eines jeden Braille-Element 11 bewußt, daß die für einen bestimmten Braille-Stift 11a-11h eines bestimmten Braille-Elementes 11 vorgenommene Bezeichnung auch für die entsprechenden Braille-Stifte 11a-11h der anderen Braille-Elemente 11 des Braille-Feldes 10 gilt.

Links neben dem der taktil erfaßbaren Darstellung der Klartext-Schriftzeichen einer Textzeile oder eines sonstigen geordneten Bereichs des Monitors dienenden n Braille-Elementen 11 des Braille-Feldes 10 sowie der den Braille-Tasten 11 zugeordneten Funktionstasten 21 des Funktionstastenfeldes 20 sind eine Anzahl von p Braille-Elementen 31a-31e sowie q Funktionstasten 32a-32e eines Status-Feldes 30 angeordnet, wobei wiederum bevorzugt wird, daß die Anzahl p der Braille-Elemente 31a-31e gleich der Anzahl q der Funktionstasten 32a-32e ist. In dem hier gezeigten Fall sind p=q=5 Braille-Elemente 31a-31e und Funktionstasten 32a-32e vorgesehen. An dieser Stelle muß betont werden, daß die gezeigte Anordnung der Braille-Elemente 31a-31e und der Funktionstasten 32a-32e nur beispielhaften Charakter besitzt und nicht zwingend ist. Es ist auch möglich, diese Braille-Elemente 31a-31e und die Funktionstasten 32a-32e an einer anderen Stelle der Vorrichtung 1 anzuordnen. Ebenfalls ist die Anzahl von p=q=5 Braille-Elementen 31a-31e und Funktionstasten 32a-32e nicht zwingend erforderlich. Es ist durchaus möglich, dem beabsichtigten Einsatzzweck der Vorrichtung 1 entsprechend, eine größere oder kleinere Zahl von Braille-Elementen 31a-31e und Funktionstasten 32a-32e vorzusehen. Die Funktion der Braille-Elemente 31a-31e sowie der Funktionstasten 32a-32e des Status-Feldes 30 wird weiter unten noch eingehend erläutert werden.

Desweiteren weist die Vorrichtung ein Auswahl-Tastenfeld 40 mit sieben vorzugsweise als Drucktasten ausgebildeten Auswahltasten 41a-41f, 42 auf, die als Auswahltasten für die noch nachstehend beschriebene Zuordnung von Befehlssätzen zu den Funktionstasten 21 und 32a-32e des Funktionstasten-Feldes 20 und des Status-Feldes 30 dienen.

Desweiteren ist auf der Oberseite 2' des Gehäuses 2 der Vorrichtung 1 ein Bedienfeld 50 für einen optional vorsehbaren Sprachrecorder angeordnet, wobei die Tasten 51 bzw. 52 dazu dienen, auf eine Notiz vor- bzw. zurückzuspringen und die entsprechende Notiz abzuspielen. Die darauf folgende Taste 53 dient als Stop- bzw. Pause-Taste. Die Taste 54 dient zum Aufnehmen einer Notiz und die Taste 55 zum Löschen einer Notiz.

Auf der Vorderseite 2" des Gehäuses 2 sind nun - wie am besten aus Figur 1 ersichtlich ist - ein vier Wipptasten 61a-61d umfassendes Wipptasten-Feld 60 sowie ein drei Drucktasten 71a-71c umfassendes Drucktasten-Feld 70 angeordnet. Es muß aber an dieser Stelle erwähnt werden, daß die Anzahl sowie die Ausbildung der Tasten der Felder 60, 70, wie sie hier beschrieben ist, nicht zwingend ist, sondern auf den jeweiligen Einsatzzweck der Vorrichtung 1 adaptiert variierbar ist. Die Funktion dieser Tasten 61a-61d und 71a-71c der Tasten-Felder 60, 70 wird weiter unten noch erläutert werden.

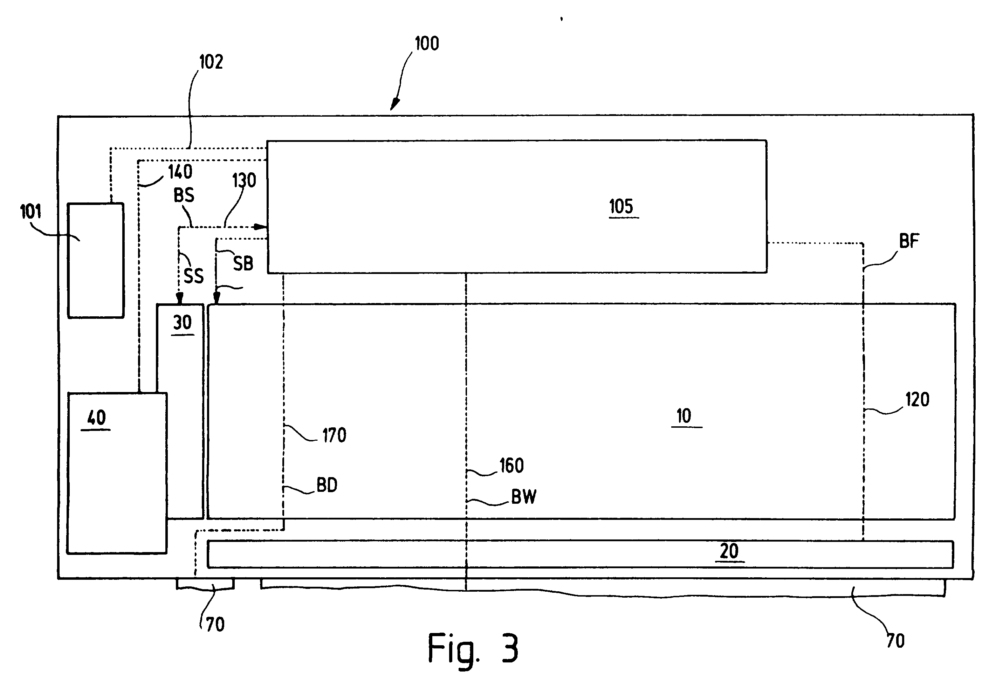

In Figur 3 ist nun schematisch der hardwaremäßige Aufbau einer zur Durchführung des Verfahrens eingesetzten elektronischen Steuerungseinrichtung 100 dargestellt, die im wesentlichen aus einem Speicherbaustein 101 und einer mit dieser über eine Datenleitung 102 verbundene Prozessoreinheit 105 besteht. Die Prozessoreinheit 105 ist über eine unidirektionale Steuerleitung 110 mit dem Braille-Feld 10 verbunden, so daß sie in der Lage ist, über die Steuerleitung 110 Steuersignale SB an die einzelnen Braille-Elemente 11 des Braille-Feldes 10 zu senden, welche eine Positionsveränderung der Stifte 11a-11h der Braille-Elemente 11 des Braille-Feldes 10 bewirken. Die Prozessoreinheit 105 ist über eine Steuerleitung 120 mit dem Funktiontasten-Feld 20 verbunden, über die Befehlssignale BE zur Prozessoreinheit 105 übertragbar sind.

Desweiteren ist die Prozessoreinheit 105 über eine bidirektionale Signalleitung 130 mit dem Statusfeld 30 der Vorrichtung 1 verbunden, so daß einerseits durch ein Betätigen der Funktionstasten 32a-32e des Status-Feldes 30 ausgelöste Befehlssignale BS zu der Prozessoreinheit 105 und andererseits Steuersignale SS zu den den Statustasten 32a-32e zugeordneten Braille-Elementen 31a-31e, welche in einer entsprechenden Positionsveränderung der Braille-Stifte 11a-11h dieser Braille-Elemente 31a-31e resultieren, übertragen werden können.

Desweiteren ist die Prozessoreinheit 105 über eine weitere Signalleitung 140 mit dem Auswahltasten-Feld 40 verbunden, wobei die Signalleitung 140 dazu dient, die durch Betätigen einer oder mehrerer der Tasten 41-41g ausgelöste Befehlssignale BA zur Prozessoreinheit 105 zu übertragen. Desweiteren sind noch weitere Signalleitungen 160, 170 vorgesehen, welche die Tastenfelder 60, 70 mit der Prozessoreinheit 105 verbinden, so daß von diesen Tastenfeldem 60, 70 durch Befähigung ihrer Tasten 61a-61d, 71a-71c ausgelöste Befehlssignale BW, BD zur Prozessoreinheit 105 übertragbar sind.

Im Speicherbaustein 101 der Steuerungseinrichtung 100 der Vorrichtung 1 ist nun zumindest einer, in der Regel aber eine Mehrzahl s von Befehlssätzen gespeichert. Diese s Befehlssätze dienen dazu, jeweils mₛ Funktionstasten 22 des Funktionstasten-Feldes 20 oder Statustasten 32a-32e des Status-Feldes 30 eine definierte Funktion zuzuordnen. Dies bedeutet, daß ein durch die Betätigung einer der vorgenannten Tasten 22, 32a-32e ausgelöstes Befehlssignal BS, BA, BD, BW die Ausführung der mit der betätigten Funktionstaste aktuell korrelierten Funktion des jeweils geladenen Befehlssatzes der mₛ gespeicherten Befehlssätze initiiert, und daß das Ergebnis des derart initiierten Funktionsablaufs von der Prozessoreinheit 105 in ein die Stifte 11a-11h der Braille-Elemente 11 des Braille-Feldes 10 ansteuerndes Steuersignal SB, SS umgesetzt wird.

Bevor nun die Funktionsweise der Vorrichtung 1 erläutert werden soll, soll vorab noch eine bevorzugte Strukturierung und/oder Konzeption der in den Speicherbaustein 101 der Steuerungseinrichtung 100 zu ladenden Befehlssätze dargelegt werden. Im Sinne einer Bedienerfreundlichkeit der Vorrichtung 1 wird es bevorzugt, daß die im Speicherbaustein 101 abzuspeichernden mₛ Befehlssätze prinzipiell in zwei unterschiedliche Gruppen eingeteilt werden. Die erste Gruppe von Befehlssätzen umfaßt vorzugsweise die für den normalen Arbeitsablauf wichtigen Grundfunktionen der Vorrichtung 1, die dann in vorteilhafter Art und Weise direkt über die Funktionstasten 21 des Funktionstasten-Feldes 20 und/oder die Funktionstasten 32a-32e des Status-Feldes 30 aufgerufen und/oder ausgeführt werden können, wobei dann die Auswahltasten 41a-41e des Auswahltasten-Feldes 40 eingesetzt werden, um einen bestimmten der zur ersten Gruppe von Befehlssätzen gehörenden Befehlssatz der mₛ gespeicherten Befehlssätze auszuwählen, d.h. um den Funktionstasten 20 und/oder der Statustasten 32a-32e des Funktionstasten-Feldes 20 und/oder des Status-Feldes 30 die gewünschte Tastenbelegung zuzuordnen.

Die übrigen Funktionen der Vorrichtung 1 werden in einer ein Menü-System ausbildenden zweiten Befehlsgruppe zusammengefaßt. Eine beispielhafte Aufzählung der Struktur dieser Menü-Befehlsgruppe wird noch weiter unten erläutert.

Nachstehend wird exemplarisch angenommen, daß im Speicherbaustein 101 der Steuerung 100 ein erster Befehlssatz gespeichert ist, der bewirkt, daß durch das Drücken der i-ten Funktionstaste 21 des Funktionstasten-Feldes 20 die i-te Textzeile des Monitors auf den Braille-Elementen 11 des Braille-Feldes 10 taktil erfaßbar dargestellt wird. Dieser erste Befehlssatz bewirkt also, daß das durch die Betätigung der i-ten Funktionstaste 21 erzeugte Befehlssignal BF die Prozessoreinheit 105 dazu veranlaßt, die den Klartext der i-ten Textzeile des Monitors repräsentierenden Signale in Steuersignale SB für die Braille-Stifte 11a-11h der Braille-Elemente 11 des Braille-Feldes 10 umzuwandeln, die dann eine entsprechende Positionsveränderung der Braille-Stifte 11a-11h der Braille-Elemente 11 bewirken.

Optional kann in diesem ersten Befehlssatz noch eine Überwachungsfunktion integriert sein, welche garantiert, daß nur diejenigen der Funktionstasten 22 zu einer Ausführung der Funktion des Anzeigens einer definierten Zeile, insbesondere einer Textzeile, des Monitors auf den Braille-Elementen 11 des Braille-Feldes 10 führen, die mit einer auf dem Monitor tatsächlich enthaltenen Zeile korreliert sind. Wird hingegen eine Funktionstaste 21 gedrückt, die nicht einer Textzeile des Monitors entspricht. so ist dann vorgesehen, daß auf den Braille-Elementen 11 als Beispiel für eine kontextbezogene Hilfefunktion - eine entsprechende Meldung ausgegeben wird. d.h. daß die Prozessoreinheit 105 ein die Braille-Stifte 11c-11h der Braille-Elemente 11 des Braille-Feldes 10 ansteuerndes Steuersignal SB erzeugt, das eine dem Meldungstext entsprechende Positionsveränderung der Braille-Stifte 11a-11h auslöst. Es ist aber auch möglich, daß die Überwachungsfunktion bewirkt, daß - gegebenenfalls zusätzlich - ein akustisches Warnsignal von der Vorrichtung 1 erzeugt wird.

Um den blinden oder sehbehinderten Benutzer der Vorrichtung 1 die oben beschriebenen Auswahl einer oder bei einem mehrzeiligen Braille-Feld 10 auch mehrerer Textzeilen des Monitors der Text- oder Datenverarbeitungsanlage zu erleichtern, wird bevorzugt, daß in dem mit der Prozessoreinheit 105 zusammenwirkenden Speicherbaustein 101 ein zweiter Befehlssatz gespeichert ist, der durch die Betätigung der Auswahltaste 41a des Auswahltasten-Feldes 40 in die Prozessoreinheit 105 - vorzugsweise vor dem Laden des ersten Befehlssatzes - geladen wird und bewirkt, daß auf den Braille-Elementen 11 des Braille-Feldes 10 eine den Inhalt der Zeilen des Monitors charakterisierende Übersicht dargestellt wird. Wird dieser zweite Befehlssatz durch Betätigen der Auswahltaste 41a aktiviert, so erzeugt die Prozessoreinheit 105 für die entsprechende Anzahl von Braille-Elementen 11 des Braille-Feldes 10 Steuersignale SB, und zwar derart, daß unterschiedlichen Inhalts-Typen der einzelnen Zeilen oder einzelner Abschnitte des Monitors je eine definierte Kombination von Braille-Stiften 11a-11h eines oder mehrerer einer Zeile oder eines Abschnitts Braille-Elements 11 zugeordnet werden. Bevorzugt wird hierbei folgende exemplarische Kodierung von Inhalts-Typen einer Textzeile oder eines Abschnitts des Monitors und somit folgende Steuersignale SB: Für eine normalbeschriebene Zeile des Monitors - wie zum Beispiel die - annahmegemäß - normalbeschriebene Textzeile i - erzeugt die Prozessoreinheit 105 ein Steuersignal SB, welches bewirkt, daß die die Braille-Punkte 2 und 5 repräsentierenden Braille-Stifte 11c, 11d des i-ten Braille-Elements 11 des Braille-Feldes 10 in ihre obere Position bewegt werden, während die übrigen Braille-Stifte 11a, 11b, 11e-11h in ihrer unteren Position verbleiben.

Befindet sich in einer Zeile oder einem Abschnitt ein Cursor, so wird dies dadurch kodiert, daß zusätzlich zu den Braille-Punkten 2 und 5 der Braille-Punkt 1 gesetzt wird. Befindet sich also in der 1-ten Zeile ein Cursor, so erzeugt die Prozessoreinheit 105 ein Steuersignal SB für das l-te Braille-Element 11 des Braille-Feldes 10, welches bewirkt, daß die Braille-Stifte 11a, 11c und 11d in ihre obere Position bewegt werden, während die übrigen der Braille-Stifte 11a-11h des 1-ten Braille-Elements 11 in ihrer unteren Position verbleiben.

Sind in dieser 1-ten Zeile mehrere Cursor, so soll dies dadurch kodiert werden, daß zusätzlich zu den Braille-Punkten 1, 2 und 5 noch der Braille-Punkt 4 gesetzt wird, indem die Prozessoreinheit 105 für das l-te Braille-Element 11 des Braille-Feldes 10 ein Steuersignal SB erzeugt, welches bewirkt, daß die Braille-Punkte 11a-11d in ihre obere Position bewegt werden, während die restlichen Braille-Punkte 11e-11h in ihrer unteren Position verbleiben.

Weist eine Textzeile oder ein Abschnitt - z. B. die Textzeile k - eine Formatierungsvorschrift z. B. eine Einrückung oder eine Sonderfunktion auf, so wird dies dadurch kodiert, daß neben den Braille-Punkten 2 und 5 auch die Braille-Punkte 3 und 6 des k-ten Braille-Elements 11 des Braille-Feldes 10 gesetzt werden, indem in diesem Fall von der Prozessoreinheit 105 ein Steuersignal SB für das k-te Braille-Element 11 des Braille-Feldes 10 erzeugt wird, welches bewirkt, daß die Braille-Stifte 11c-11f in ihre obere Position bewegt werden, während die übrigen der Braille-Punkte 11a-11h des k-ten Braille-Feldes 10 in ihrer unteren Position verbleiben.

Wird eine Zeile oder ein Abschnitt des Monitors durch Attribute oder Farben besonders hervorgehoben, so wird dies dadurch bewerkstelligt, daß neben den Braille-Punkten 2, 5 auch noch die Braille-Punkte 7 und 8 gesetzt werden, indem von der Prozessoreinheit 105 ein Steuersignal SB erzeugt wird, welches bewirkt, daß die entsprechenden Braille-Stifte 11a-11h dieses Braille-Elements 11 des Braille-Feldes 10 in ihre obere Position bewegt werden.

Für den Fall, daß eine Zeile l oder ein Abschnitt des Monitors leer ist, erzeugt die Prozessoreinheit 105 ein Steuersignal, welches bewirkt, daß alle Braille-Stifte 11a-11h des diesem Bildschirmsegment zugeordneten Braille-Elements 11 des Braille-Feldes 10 in ihre untere Position bewegt werden.

Bezüglich des oben erwähnten Begriffs einer leeren Zeile oder eines leeren Abschnitts eines Monitors ist noch anzuführen, daß dieser Begriff nicht nur denjenigen Fall umfaßt, bei dem in tatsächlicher Hinsicht keine Zeichen enthalten sind. Vielmehr soll der Begriff "leere Zeile" oder "leerer Abschnitt" auch diejenigen Fälle umfassen, bei denen durch eine entsprechende Wahl einer Voreinstellung, die vorzugsweise über einen Befehlssatz der zweiten Gruppe von Befehlssätzen ausgewählt wird, bestimmte Zeichen oder Zeichenfolgen unterdrückt werden.

Ein dritter im Speicherbaustein 101 der Steuerungseinrichtung 100 gespeicherte Befehlssatz sieht vor, daß - nachdem dieser dritte Befehlssatz in der Prozessoreinheit durch eine Betätigung der entsprechenden Auswahltasten - z. B. durch eine zweimalige Betätigung der Auswahltaste 41d - geladen wurde, die Prozessoreinhelt 105 ein Steuersignal SS für eines der Braille-Elemente 31a-31e des Status-Feldes 30 - z.B. das fünfte Braille-Element 31e - erzeugt, welches die Art der aktiven Cursor-Verfolgung repräsentiert. Beispielhafterweise ist möglich, daß die Prozessoreinheit 105 ein die Braille-Stifte 11a-11h des fünften Braille-Elements 31e des Status-Feldes 30 ansteuerndes Steuersignal SS erzeugt, welches den Buchstaben H bzw. S bzw. M bzw. A des Braille-Alphabets repräsentiet, wenn eine Hardware-Cursorverfolgung bzw. eine Software-Cursorverfolgung bzw. eine Mauszeigerverfolgung bzw. eine automatische Cursor-Erkennung und -verfolgung aktiv ist.

Besonders vorteilhaft ist es wenn der dritte Befehlssatz noch Anweisungen enthält, die bei geladenem drittem Befehlssatz die Prozessoreinheit 105 veranlassen, Steuersignale für die Braille-Stifte 11a-11h der ersten vier Braille-Elemente 31a-31d des Status-Feldes 30 zu erzaugen, welche bewirken, daß auf diesen Braille-Elementen 31a-31d die Buchstaben H, S, M und A dargestellt werden. Gleichzeitig ist vorgesehen, daß der dritte Befehlssatz Anweisungen enthält, die die Prozessoreinheit 105 veranlassen, daß - nachdem durch eine Betätigung einer der Tasten 32a-32d ein Befehlssignal BS erzeugt wurde - in den ihr zugeordneten Verfolgungsmodus umgeschalten wird, welcher auf dem mit der gedrückten Taste 32a-32d korrelierten Braille-Element 31a-31d des Status-Feldes 30 dargestellt ist.

Entsprechend einem durch ein Drücken der sechsten Auswahltaste 41f in die Prozessoreinheit 105 ladbaren vierten Befehlssatz ist vorgesehen, daß bei ausgewähltem viertem Befehlssatz die Prozessoreinheit 105 Steuersignale SB für die Braille-Stifte 11a-11h der Braille-Elemente 11 des Braille-Feldes 10 erzeugt, welche bewirken, daß anstelle des im Braille-Alptabet codierten Textes der ausgewählten Zeile in codierter Form Attribute dieser Textzeile darstellbar sind.

Es ist auch möglich, daß der vierte Befehlssatz optional derart ausgelegt ist, daß er eine kombinierte Darstellung von Text und den zu den Textsymbolen des dargestellten Textes gehörigen Attribute auf den Braille-Elementen 11 des Braille-Feldes 10 zuläßt. Der jeweils standardmäßig beim Aufruf des vierten Befehlssatz initiierte Modus-Attributdarstellung oder kombinierte Text-Attributdarstellung - kann durch eine entsprechende Funktion eines der weiter unten noch näher beschriebenen Befehlssätze der zur zweiten Gruppe von Befehlssätzen (Menü-Gruppe) gehörende Befehlssätze durchgeführt werden.

Gemäß einem fünften Befehlssatz, der durch Betätigen der zweiten Auswahltaste 41b in die Prozessoreinheit 105 geladen wird ist vorgesehen, daß der Benutzer der Vorrichtung 1 gezielt die Attribute einer noch auszuwählenden Zeile des Monitors auf den Braille-Elementen 11 des Braille-Feldes 10 darstellen kann, indem er zuerst - entsprechend den eingangs beschriebenen ersten beiden Befehlssätzen - durch Betätigung der i-ten Funktionstaste 21 des Funktionstasten-Feldes 20 die i-te Zeile Monitors auswählt, und daß die Ausführung des fünften Befehlssatzes dann bewirkt, daß die Attribute dieser i-ten Zeile auf den Braille-Elementen 11 des Braille-Feldes 10 dargestellt werden. Abschließend zu der oben aufgeführten Attributdarstellung vom Zeichen einer Zeile soll angeführt werden, daß der Begriff Attribut in seinem weitesten Sinne zu begreifen ist, so daß auch Parameter wie die Farbe eines Zeichens oder dessen ASCII-Wert unter diesen Begriff fallen sollen.

Gemäß einem sechsten Befehlssatz ist vorgesehen, daß durch Drücken der Auswahltaste 42d temporär im Speicherbaustein 101 abgelegte Zeileninhalte auf den Braille-Elementen 11 des Braille-Feldes 10 dargestellt werden, wobei diese Zeilen vorher vom Monitor des Text- oder Datenverarbeitungssystems übernommen wurden. Die Art und Weise dieser Textübernahme wird weiter unten noch beschrieben werden. Bei der beschriebenen Vorrichtung 1 ist vorgesehen, daß so viele Textzeilen in dem Speicherbaustein 101 abgespeichert werden können wie Funktionstasten 32a-32e des Status-Feldes 30 vorgesehen sind, also in dem hier beschriebenen Fall fünf Textzeilen. Nachdem durch ein Betätigen der Auswahltaste 42 der sechste Befehlssatz in die Prozessoreinheit 105 der Steuerungseinrichtung 100 geladen wurde, erzeugt die Prozessoreinheit 105 Steuersignale SS für die Braille-Elemente 31a-31e des Status-Feldes 30, welche charakterisieren, daß entsprechende Textzeilen geladen wurden. Durch Betätigen der einem bestimmten Braille-Element 31a-31e zugeordneten Funktionstaste 32a-32e - z.B. der dritten Funktionstaste 32c des Status-Feldes 30 - wird die entsprechende Textzeile - in dem hier gewählten Beispiel also die dritte in Speicherbaustein 101 gespeicherte Textzeile - auf den Braille-Elementen 11 des Braille-Feldes 10 dargestellt, indem die Prozessoreinheit 105 entsprechende Steuersignale SB für die Braille-Stifte 11a-11h der Braille-Elemente 11 des Braille-Feldes 10 erzeugt und diese zu den Braille-Stiften 11a-11h weiterleitet.

Gemäß einem siebten Befehlssatz ist vorgesehen, daß durch das Betätigen der Auswahltaste 41c der Inhalt einer weiteren im Speicherbaustein 101 abgespeicherten Textzeile auf den Braille-Elementen 11 des Braille-Feldes 10 dargestellt wird. Die Speicherung dieser Textzeile erfolgt derart, daß zuerst die zu speichernde Zeile des Monitors ausgewählt wird, indem durch Betätigen der entsprechenden Auswahltaste die oben beschriebene Bildschirmübersicht aktiviert wird. Statt nun eine Zeile über die Funktionstaste 21 des Funktionstasten-Feldes 20 direkt anzuwählen, wird nun die Auswahltaste 41c gedrückt, um diese Memory-Funktion für die Speicherung einer Zeile im Speicherbaustein 101 zu aktivieren. Nach dem Drücken dieser Auswahltaste 41c wird dann diejenige Funktionstaste 21 des Funktionstasten-Feldes 20 gedrückt, die der zu speichernden Zeile entspricht. Durch Betätigen der Auswahltaste 41a wird die Speicherung der permanent zur Verfügung zu stellenden Zeile abgeschlossen.

Wird nun die Auswahltaste 41c gedrückt, so wird die Prozessoreinheit 105 veranlaßt, Steuersignale SB für die Braille-Stifte 11a-11h der Braille-Elemente 11 des Braille-Feldes 10 zu erzeugen, welche bewirken, daß auf dem Braille-Feld 10 diese permanent zur Verfügung stehende Zeile dargestellt wird.

Gemäß einem achten Befehlssatz, der durch Betätigen der Auswahltaste 41b ladbar ist, ist vorgesehen, daß auf den Braille-Elementen 11 des Braille-Feldes 10 zusätzlich zu den im Status-Feld 30 dargestellten Statusinformationen weitere Statusinformationen darstellbar sind. So ist es möglich, in einer durch eine entsprechende Betätigung der Auswahltasten 41a-41f des Auswahltasten-Feldes 40 auswählbaren ersten Status-Zeile Symbole dargestellt werden welche die Form der Cursordarstellung auf dem Monitor charakterisieren. Dies kann z. B. dadurch erfolgen, daß ein Braille-Buchstabe "u" für die Cursor-Darstellungsart "Underline", ein Braille-Buchstabe "b" für die Cursor-Darstellungsart "blocked", ein Braille-Buchstabe "i" für die Cursor-Darstellungsart "invisible", ein Braille-Buchstabe "S" für die Cursor-Darstellungsart "Softcursor", ein Braille-Buchstabe "M" für die Cursor-Darstellungsart "Mouse" dargestellt wird. Desweiteren ist es vorgesehen, daß auf den Braille-Elementen 11 die Position des Cursors nach Zeile und Spalte angegeben wird.

Desweiteren kann auf den Braille-Elementen 11 des Braille-Feldes 10 die eingestellte Größe des Bildschirmfensters dargestellt werden, auf das die Cursor-Erkennung und -Verfolgung beschränkt wurde, oder das von der Cursor-Erkennung und -Verfolgung ausgeschlossen ist. Weitere auf den Braille- Elementen 11 des Braille-Feldes 10 darstellbare Statusinformationen der ersten Statuszeile besteht darin, ob ein definierter Bereich der Cursor-Erkennung und -Verfolgung an- oder ausgeschaltet ist, oder ob eine Zeilensegmentierung an- oder ausgeschaltet ist. Des weiteren ist vorgesehen, daß die Art der gewählten Textdarstellung (Sechs oder Acht-Punkt-Braille) ausgewählt ist, oder ob eine getrennte oder kombinierte Text-Darstellung vorgestellt ist. Des weiteren sind Statusinformationen wie die Programmversion des Textverarbeitungssystems oder die Art des Graphikadapters etc. darstellbar.

In einer zweiten auf den Braille-Elementen darstellbaren Statuszeile ist vorgesehen, daß die manuelle eingestellten Cursorarten für die Cursor-Verfolgung, vorzugsweise geordnet nach den eingestellten Prioritätsstufen zwischen den verschiedenen Cursom - dargestellt wird.

In einer dritten auswählbaren Statuszeile findet die Anzeige von definierten Überwachungsbereichen statt.

Während auf den Braille-Elementen 11 wahlweise eine der o.g. Statusinformationszeilen dargestellt wird, zeigen die Elemente 31a-31e und 32a-32e des Status-Feldes 30 vorzugsweise permanent folgende Statusanzeigen an: Auf den Braille-Elementen 31a-31b des Status-Feldes wird die Nummer der aktuell auf den Braille-Elementen 11 des Braille-Feldes 10 dargestellten Zeile angezeigt. Das dritte Braille-Element 31c des Status-Feldes zeigt bei einem aus zwei Teilfeldern bestehenden Braille-Feld 10 an, ob eine Marke sich im linken oder rechten Teilfeld des Braille-Feld 10 befindet. In Braille-Feld 31e des Status-Feldes 30 wird die bereits oben erwähnte Anzeige des Cursor-Modus durchgeführt.

Ein weiterer Befehlssatz besteht darin, daß durch eine Betätigung der Auswahltasten 41c und 41e eine Umschaltung zwischen zwei oder mehreren Teilbereichen eines derart segmentierten Braille-Feldes durchführbar ist. Der jeweils aktive Teilbereich soll alle Funktionen aufweisen, während der Funktionsumfang des der jeweils inaktiven Teilbereiche stark reduziert ist und vorzugsweise hauptsächlich zur ständigen Anzeige eines bestimmten Monitorausschnittes genutzt wird.

Als ein letztes Beispiel für einen vorzugsweise direkt aktivierbaren Befehlssatz wird die Funktion der Stummschaltung der Braille-Elemente 11 des Braille-Feldes 10 aufgeführt, durch die bewirkbar ist, daß eine die Braille-Stifte 11 speisende Hochspannung abgeschaltet wird, während die übrige Hardware der Vorrichtung 1 weiterhin mit Spannung versorgt wird. Es ist vorgesehen, daß durch ein gemeinsames Drücken der Auswahltasten 41a und 41b des Auswahltasten-Feldes 40 diese Funktion in die Prozessoreinheit 105 geladen wird.

In der Vorrichtung 1 ist des weiteren ein Hilfesystem implementiert, das durch ein zweimaligen Drücken der Auswahltaste 41a aktivierbar ist. Dieses Hilfssystem ist einerseits als Handbuch implementiert, welches erlaubt, daß der Benutzer durch Auswahl entsprechender Zeilen bestimmte Themen nachschlagen kann. Andererseits ist vorgesehen, daß durch Betätigung einer Auswahltaste 41a-41f des Auswahltaste-Feldes 40 eine kontextbezogene Hilfe zur Verfügung steht, die dem Benutzer bei einem auftretenden Problem gezielte Informationen zu dessen Bewältigung zur Verfügung stellt. Vorzugsweise sind diese Hifstexte in Speicherbaustein 101 im HTML-Format gespeichert, so daß ein Hypertext-fähiges Hilfesystem zur Verfügung steht.

Die Menü-Gruppe von Befehlen wird dadurch aufgerufen, indem der Benutzer die Auswahltaste 42 zum Aufruf der Menü-Gruppe betätigt. Beim Aufruf dieser Menü-Gruppe wird der aktuelle Inhalt der Braille-Elemente 11 des Braille-Feldes 10 temporär in dem Speicherbaustein 101 der Steuereinrichtung 100 abgespeichert und nach dem Schließen der Menü-Gruppe wieder auf diesem angezeigt.

Bezüglich der durch die Menü-Gruppe durchführbaren Einstellung ist anzumerken, daß die vom Benutzer vorgenommenen Änderungen ebenfalls temporär im Speichenbaustein abgelegt werden, wobei das Schließen der Menü-Gruppe durch eine nochmalige Betätigung der Auswahltaste 42 bewirkt, daß die durch die vom Benutzer vorgenommenen Änderungen temporär implementierten Funktionsabläufe ausgeführt werden. Es ist aber auch möglich, diese vom Benutzer vorgenommenen Änderungen - anstelle sie temporär im Speicherbaustein 101 abzuspeichern - als Voreinstellungen für den nächsten Aufruf abzuspeichern. Nach dem Aufruf der Menü-Gruppe sind auf den Braille-Elementen 10 die Hauptmenü-Einträge dargestellt. Durch das Drücken der den entsprechenden Braille-Elementen 11 zugeordneten Funktionstasten 21 des Funktionstasten-Feldes 20 wird einer der Hauptmenü-Einträge ausgewählt, woraufhin auf den Braille-Elementen 11 des Braille-Feldes 10 die Menü-Einträge eines ausgewählten Menü-Eintrags gehörenden Untermenüs dargestellt werden. Durch eine entsprechende weitere Vorgangsweise gelangt der Benutzer dann in einer vom anderen menüorientierten Betriebssystemen - z.B. dem Betiebssystem "Windows" - her bekannten Art und Weise zu der gewünschten Funktion.

Alternativ zu der Auswahl der entsprechenden Menü-Einträge über die Funktionstasten 21 des Funtionstasten-Feldes 20 ist es auch möglich, durch Drücken der Pfeiltasten der Tastatur des Text- oder Datenverarbeitungssystems die entsprechende Menü-Einträge auszuwählen und durch Betätigen der "Return"-Taste der Tastatur die ausgewählte Funktion zu aktivieren.

Zur Kennzeichnung, welche Menü-Gruppe oder welches Untermenü geöffnet ist, wird die Darstellung des Symbols für den entsprechenden Menü-Eintrag dadurch gekennzeichnet, daß die Prozessoreinheit 105 zusätzlich zu den die Darstellung der Menü-Einträge bewirkenden Steuersignale SB für die Braille-Stifte 11a-11h der Braille-Elemente 11 des Braille-Feldes 10 zusätzlich Steuersignale erzeugt, welche bewirkten, daß unter dem Symbol für das gerade aktive Fenster die Braille-Punkte sieben und acht gesetzt werden.

Es ist aber auch möglich, daß - anstelle gleichzeitig mehrere Symbole für die jeweils in der ausgewählten Menü-Ebene enthaltenen Menü-Einträge gleichzeitig auf dem Braille-Feld 10 darzustellen - vorgesehen ist, daß diese Menü-Punkte sukzessive vertikal angeordnet auf den Braille-Elementen 11 des Braille-Feldes 10 dargestellt werden, und daß das Fortschalten von einem Menü-Eintrag zum darauffolgenden Menü-Eintrag der Menü-Ebene durch Betätigen der Wipp-Tasten 61d des Wipptasten-Feldes 60 durchgeführt wird. Um von einem Menü-Eintrag einer Menü-Ebene zum ersten Menü-Eintrag dieser Menü-Ebene zu gelangen, ist vorgesehen, daß eine Betätigung der Taste 71a des Tastenfeldes 70 diese entsprechende Funktion durchführt. In entsprechender Art und Weise gelangt man durch Betätigen der Taste 71c des Tastenfeldes 70 zum letzten Menü-Eintrag einer Menü-Ebene.

Nach der Durchführung der vorgesehenen Änderungen im Menü wird die Menü-Gruppe entweder durch Auswahl des Menü-Eintrags "Zurück" oder durch Drükken einer der Escape-Taste der Tastatur entsprechenden Auswahltaste 42 des Auswahltasten-Feldes 40 geschlossen.

Es kann optional noch vorgesehen sein, daß den auf den Braille-Elementen 11 des Braille-Feldes 10 dargestellten Menü-Einträgen ein Symbol vorangestellt wird, welches anzeigt, ob dieser Menü-Eintrag zum aktuellen Zeitpunkt angewählt werden kann. Dies wird durch ein definiertes Symbol, z.B. das Symbol "Minus", gekennzeichnet. Einträge, die zum gegebenen Zeitpunkt nicht ausführbar sind, werden durch ein weiteres Symbol, z.B, das Symbol "=" gekennzeichnet, und Einträge, die gesperrt sind, werden durch ein drittes Symbol, z.B. durch das durch den ASCII-Wert 24 repräsentierte Symbol, gekennzeichnet.

Menü-Einträge, die über Schaltflächen verfügen und kein Untermenü bzw. keine Dialogbox beinhalten, werden, wenn sie aktiviert wurden, nicht mehr mit dem die Auswählbarkeit dieser Funktion kennzeichnenden Symbolen am Zeilenbeginn gekennzeichnet, sondern die Aktivierung wird durch die Anzeige eines weiteren Symbols, z.B. eines Stern-Symbols, signalisiert. Die Auswahl einer Schaltfläche eines des Menü-Punkts wird ebenfalls über die Funktionstasten 21 des Funktionstasten-Feldes 20 durchgeführt.

Bezüglich der Wipp-Taste 61a-61d des Wipptasten-Feldes 60 ist noch auszuführen, daß diese außer der oben erwähnten Funktion auch optional noch dazu einsetzbar sind, daß durch Betätigung der entsprechenden 61a-61d Taste ein Lese/Anzeigefenster nach oben oder nach unten bewegt wird, oder daß an das Ende einer Zeile gesprungen wird. Die Drucktasten 71a-71c des Drucktasten-Feldes 70 dienen optional dazu, außer der oben aufgeführten Menü-Funktion eine Sprungfunktion in eine obere oder eine untere Bildschirmzeile durchzuführen, oder um in eine Cursorzeile zu springen.

## Patentansprüche

1. Vorrichtung zur Steuerung der Position von Braille-Stiften (11a-11h) mindestens eines Braille-Elements (11) eines Braille-Feldes (10), die eine Steuereinrichtung (100) mit einem Speicherbaustein (101) und einer Prozessoreinheit (105) aufweist, die (105) über eine Steuerleitung (110) zur Übertragung von Steuersignalen (SB), durch die die Braille-Stifte (11a-11h) der Braille-Elemente (11) des Braille-Feldes (10) positionssteuerbar sind, mit dem Braille-Feld (10) verbunden ist, und die ein über eine weitere Steuerleitung (120) mit der Steuereinrichtung (100) verbundenes Funktionstasten-Feld (20) mit einer Anzahl von m Funktionstasten (21) aufweist, über die (120) durch Betätigung mindestens einer der m Funktionstasten (21) des Funktionstasten-Feldes (20) ausgelöste Befehlssignale (BE) zur Prozessoreinheit (105) übertragbar sind, dadurch gekennzeicnnet, daß im Speicherbaustein (101) der Steuereinrichtung (100) eine Anzahl von s Befehlssätzen abspeicherbar ist, durch die jeweils mₛ der m Funktionstasten (21) des Funktionstasten-Feldes (20) eine definierte Tastenbelegung zuordbar ist, daß die Vorrichtung (1) ein Auswahltasten-Feld (40) mit mindestens einer Auswahltaste (41-4f; 42) aufweist, daß durch die Betätigung mindestens einer der Auswahltasten (41a-41f; 42) des Auswahltasten-Feldes (40) ein zur Prozessoreinheit (105) übertragbares Befehlssignal (BA) erzeugbar ist, durch das der Befehlssatz, welcher der oder den betätigten Auswahltasten (41a-41f; 42) des Auswahltasten-Feldes (40) zugeordnet ist, ladbar ist, so daß ein durch eine Betätigung mindestens einer der m Funktionstasten (21) des Funktionstasten-Feldes (20) ausgelöstes Befehlssignal (BS, BA) die Ausführung der mit der betätigten Funktionstaste (21) aktuell korrellierten Funktion des jeweils in die Prozessoreinheit (105) geladenen der mₛ im Speicherbaustein (101) gespeicherten Befehlssätze initiiert, und daß die Prozessoreinheit (105) ein mit dem Ergebnis des derart initiierten Funktionsablaufs korrelliertes Steuersignal für die Braille-Stifte (11a-11h) mindestens eines der Braille-Elemente (11) des Braille-Feldes (10) erzeugt.

2. Vorrichtung nach Anspruch 1, dadurch gekennzeichnet, daß das Auswahltasten-Feld (40) mindestens eine Auswahltaste (41a-41f) aufweist, deren Betätigung eine unmittelbare Zuordnung eines bestimmten Befehlssatzes der mₛ im Speicherbaustein (101) der Steuereinrichtung (100) gespeicherten Befehlssätze zu den Funktionstasten (21) des Funktionstasten-Feldes (20) bewirkt.

3. Vorrichtung nach Anspruch 2, dadurch gekennzeichnet, daß die Befehlssätze, die mit einer Auswahltaste (41a-41f; 42) des Auswahltasten-Feldes (40), durch welche eine unmittelbare Zuordnung von Funktionen zu einer Funktionstaste (21) des Funktionstasten-Feldes (20) bewirkbar ist korrelliert sind, im Speicherbaustein (101) der Steuereinrichtung (100) in einer ersten Gruppe von Befehlssätzen zusammengefaßt sind.

4. Vorrichtung nach Anspruch 1, dadurch gekennzeichnet, daß das Auswahltasten-Feld (40) mindestens eine weitere Auswahltaste (42) aufweist, deren Betätigung die Ausführung eines im Speicherbaustein (101) der Steuereinheit (100) gespeicherten Befehlssatzes bewirkt, durch den mindestens einer der Funktionstasten (21) des Funktionstasten-Feldes (20) eine derartige Belegung zuordbar ist, daß durch eine Betätigung einer oder mehrerer Funktionstasten (21) des Funktionstasten-Feldes (20) mindestens ein Befehlssatz einer zweiten Befehlssatz-Gruppe der mₛ im Speicherbaustein (101) gespeicherten Befehlssätze in die Prozessoreinheit (105) ladbar ist.

5. Vorrichtung nach Anspruch 4, dadurch gekennzeichnet, daß durch die Prozessoreinheit (105) ein die durch die Betätigung der weiteren Auswahltaste (42) des Auswahltasten-Feldes (40) initiierte Belegung der Funktionstasten (21) des Funktionstasten-Feldes (20) charakterisierendes Steuersignal für die Braille-Stifte (11a-11h) der Braille-Elemente (11) des Braille-Feldes (10) erzeugbar ist.

6. Vorrichtung nach einem der vorangehenden Ansprüche, dadurch gekennzeichnet, daß die Vorrichtung (1) ein Statusfeld (30) mit mindestens einer Statustaste (32a-32e) aufweist, das über eine Signalleitung (130) mit der Prozessoreinheit (105) verbindbar ist.

7. Vorrichtung nach Anspruch 6, dadurch gekennzeichnet, daß mindestens einer Statustaste (32a-32e) des Statusfeldes (30) ein Braille-Element (31a-31e) zugeordnet ist.

8. Vorrichtung nach einem der vorangehenden Ansprüche, dadurch gekennzeichnet, daß im Speicherbaustein (101) der Steuereinrichtung (100) der Vorrichtung (1) ein durch eine Betätigung der Auswahltasten (41a-41f) des Auswahltasten-Feldes (40) in die Prozessoreinheit (105) ladbarer erster Befehlssatz gespeichert ist, dessen Ausführung bewirkt, daß den Funktionstasten (21) des Funktionstasten-Feldes (20) eine derartige Belegung zuordbar ist, daß durch die Betätigung der i-ten Funktionstaste (21) ein Befehlssignal (BF) erzeugbar ist, dessen Ausführung bewirkt, daß die Prozessoreinheit (105) ein Steuersignal (SB) für die Braille-Stifte (11a-11h) der Braille-Elemente (11) des Braille-Feldes erzeugt, das einen Klartext eines i-ten Bereichs eines Monitors repräsentiert.

9. Vorrichtung nach Anspruch 8, dadurch gekennzeichnet, daß in diesem ersten Befehlssatz eine Überwachungsfunktion integriert ist, derart, daß durch die Prozessoreinheit (105) ein Warnsignal erzeugbar ist, wenn der der betätigten Funktionstaste (21) zugeordnete Bereich einen definierten Inhalt aufweist.

10. Vorrichtung nach einem der vorangehenden Ansprüche, dadurch gekennzeichnet, daß im Speicherbaustein (101) ein durch die Betätigung einer weiteren Auswahltaste (41a) des Auswahltasten-Feldes (40) in die Prozessoreinheit (105) ladbarer zweiter Befehlssatz gespeichert ist, dessen Ausführung bewirkt, daß die Prozessoreinheit (105) Steuersignale (SB) für die Braille-Stifte (11a-11h) der Braille-Elemente (11) des Braille-Feldes (10) erzeugt, durch die jedem Braille-Element (11) eine den Inhalt des ihm zugeordneten Bereichs charakterisierende Positionierung seiner Braille-Stifte (11a-11h) erzeugbar ist.

11. Vorrichtung nach einem der vorangehenden Ansprüche, dadurch gekennzeichnet, daß im Speicherbaustein (101) der Steuereinrichtung (100) der Vorrichtung (1) ein durch die Betätigung einer weiteren Auswahltaste (41d) des Auswahltasten-Feldes in die Prozessoreinheit (105) ladbarer dritter Befehlssatz gespeichert ist, der bewirkt, daß die Prozessoreinheit (105) ein Steuersignal (SS) für die Braille-Stifte (11a-11h) mindestens eines der Braille-Elemente (31a-31e) des Status-Feldes (30) erzeugbar ist.

12. Vorrichtung nach einem der vorangehenden Ansprüche, dadurch gekennzeichnet, daß in den Speicherbaustein (101) der Steuereinrichtung (100) der Vorrichtung (1) ein durch die Betätigung einer weiteren Auswahltaste (41f) des Auswahltasten-Feldes (40) in die Prozessoreinheit (105) ladbarer vierter Befehlssatz gespeichert ist, der bewirkt, daß bei ausgewähltem vierten Befehlssatz die Prozessoreinheit (105) Steuersignale (SB) für die Braille-Stifte (11a-11h) der Braille-Elemente (11) des Braille-Feldes (10) erzeugt, welche Attribute und/oder Informationen des durch die Betätigung der i-ten Funktionstaste (21) des Funktionstasten-Feldes (20) ausgewählten Bereichs des Monitors repräsentieren.

13. Vorrichtung nach einem der vorangehenden Ansprüche, dadurch gekennzeichnet, daß in dem Speicherbaustein (101) der Steuereinrichtung (100) der Vorrichtung (1) ein durch die Betätigung einer Auswahltaste (41b) in die Prozessoreinheit (105) ladbarer fünfter Befehlssatz gespeichert ist, der bewirkt, daß die Prozessoreinheit (105) Steuersignale erzeugt, welche die Attribute eines nicht aktuell ausgewählten Bereichs des Monitors repräsentieren.

14. Vorrichtung nach einem der vorangehenden Ansprüche, dadurch gekennzeichnet, daß im Speicherbaustein (101) der Steuereinrichtung (100) der Vor-richtung (1) ein durch die Betätigung einer Auswahltaste (42d) des Auswahltasten-Feldes in die Prozessoreinheit (105) ladbarer sechster Befehlssatz gespeichert ist, durch den den Funktionstasten (21) des Funktionstasten-Feldes (20) eine Tastenbelegung zuordbar ist, die bewirkt, daß durch eine Betätigung der i-ten Funktionstaste der Inhalt eines dieser Funktionstaste zugeordneten Bereichs des Monitors in den Speicherbaustein (101) abspeicherbar ist.

15. Vorrichtung nach Anspruch 14, dadurch gekennzeichnet, daß der sechste Befehlssatz eine Befehlssequenz enthält, die bewirkt, daß die Prozessoreinheit (105) ein Steuersignal (SS) für die Braille-Stifte (11a-11h) der Braille-Elemente (31a-31e) des Status-Feldes (30) erzeugbar ist, welches die in den Speicherbaustein (101) geladenen Bereiche des Monitors repräsentiert.

16. Vorrichtung nach einem der vorangehenden Ansprüche, dadurch gekennzeichnet, daß die Vorrichtung (1) ein Hilfesystem aufweist, daß durch Betätigung einer Auswahltaste (41a) des Auswahltasten-Feldes (40) aktivierbar ist.

17. Vorrichtung nach einem der vorangehenden Ansprüche, dadurch gekennzeichnet, daß die Vorrichtung (1) ein weiteres Tasten-Feld (60) aufweist, durch das ein sequentieller Aufruf der im Speicherbaustein (101) der Steuereinrichtung (100) gespeicherten mₛ Befehlssätze durchführbar ist.

18. Vorrichtung nach einem der vorangehenden Ansprüche, dadurch gekennzeichnet, daß die Vorrichtung (1) einen Bedienfeld (50) Für einen Sprachrekorder aufweist.

19. Verfahren zur Steuerung der Position von Braille-Stiften (11a-11h) mindestens eines Braille-Elements (11) eines Braille-Feldes (10), bei dem eine Steuereinrichtung (100) mit einem Speicherbaustein (101) und einer Prozessoreinheit (105) und ein m Funktionstasten (21) aufweisendes Funktionstasten-Feld (20) vorgesehen ist, bei dem ein durch eine Betätigung mindestens einer der m Funktionstasten (21) des Funktionstasten-Feldes (20) ausgelöstes Befehlssignal (BE) zur Prozessoreinheit (105) übertragen wird, dadurch gekennzeichnet, daß im Speicherbaustein (101) der Steuereinrichtung (100) eine Anzahl von s Befehlssätzen abgespeichert wird, durch die jeweils mₛ der m Funktionstasten (21) des Funktionstasten-Feldes (20) eine definierte Tastenbelegung zugeordnet wird, daß durch die Betätigung mindestens einer Auswahltaste (41a-41f; 42) eines Auswahltasten-Feldes (40) ein zur Prozessoreinheit (105) übertragbares Befehlssignal (BA) erzeugt wird, durch das den Funktionstasten (21) des Funktionstasten-Feldes (20) ein bestimmter Befehlssatz zugeordnet wird, bei dem durch eine Betätigung mindestens einer der mₛ Funktionstasten (21) des Funktionstasten-Feldes (20) ein Befehlssignal (BS, BA) ausgelöst wird, daß die Durchführung der mit der betätigten Funktionstaste (21) aktuell korrellierten Funktion des jeweils in die Prozessoreinheit (105) geladenen der mₛ im Speicherbaustein (101) gespeicherten Befehlssätze initiiert wird, und daß die Prozessoreinheit (105) ein mit dem Ergebnis des derart initiierten Funktionsablaufes korrelliertes Steuersignal für die Braille-Stifte (11a-11h) mindestens eines der Braille-Elemente (11) des Braille-Feldes (10) erzeugt.

## Claims

1. Device for controlling the position of Braille pins (11a-11h) of at least one Braille element (11) of a Braille field (10), which comprises control means (100) with a storage component (101) and a processor unit (105), which (105) is connected to the Braille field (10) via a control line (110) for communicating control signals (SB), by which the position of the Braille pins (11a-11h) of the Braille elements (11) of the Braille field (10) can be controlled, and which comprises a function key field (20) having a number of m function keys (21) and connected to the control means (100) via a further control line (120), via which (120) command signals (BE) triggered by actuation of at least one of the m function keys (21) of the function key field (20) are communicatable to the processor unit (105), characterized in that in the storage component (101) of the control means (100) a number of s command sets can be stored, by which a defined key allocation can be assigned to mₛ of the m function keys (21) of the function key field (20), respectively, that the device (1) comprises a selection key field (40) with at least one selection key (41-41f; 42), that by the actuation of at least one of the selection keys (41a-41f; 42) of the selection key field (40) a command signal (BA) communicatable to the processor unit (105) can be generated, by which the command set, which is assigned to the actuated selection key or selection keys (41a-41f; 42) of the selection key field (40), can be loaded, so that a command signal (BS, BA) triggered by an actuation of at least one of the m function keys (21) of the function key field (20) initiates the execution of the function currently correlated with the actuated function key (21) of the particular one of the mₛ command sets stored in the storage component (101), which is loaded in the processor unit (105), and that the processor unit (105) generates a control signal for the Braille pins (11a-11h) of at least one of the Braille elements (11) of the Braille field (10) correlated with the result of the function execution thus initiated.

2. The device according to claim 1, characterized in that the selection key field (40) comprises at least one selection key (41a-41f), whose actuation results in a direct assignment of a particular command set of the mₛ command sets stored in the storage component (101) of the control means (100) to the function keys (21) of the function key field (20).

3. The device according to claim 2, characterized in that the command sets, which are correlated with a selection key (41a-41f; 42) of the selection key field (40), by which a direct assignment of functions to a function key (21) of the function key field (20) can be achieved, are contained in a first group of command sets in the storage component (101) of the control means (100).

4. The device according to claim 1, characterized in that the selection key field (40) comprises at least a further selection key (42), whose actuation results in the execution of a command set stored in the storage component (101) of the control means (100), by which to at least one of the function keys (21) of the function key field (20) such an allocation is assignable, that by an actuation of one or several function keys (21) of the function key field (20) at least one command set of a second group of command sets of the mₛ command sets stored in the storage component (101) can be loaded into the processor unit (105).

5. The device according to claim 4, characterized in that by the processor unit (105) a control signal for the Braille pins (11a-11h) of the Braille elements (11) of the Braille field (10) can be generated, which characterizes the allocation of the function keys (21) of the function key field (20), which is initiated by the actuation of the further selection key (42) of the selection key field (40).

6. The device according to one of the afore-mentioned claims, characterized in that the device (1) comprises a status field (30) with at least one status key (32a-12e), which can be connected with the processor unit (105) by means of a signal line (130).

7. The device according to claim 6, characterized in that a Braille element (31a-31e) is assigned to at least one status key (32a-32e) of the status field (30).

8. The device according to one of the afore-mentioned claims, characterized in that in the storage component (101) of the control means (100) of the device (1) a first command set is stored, which can be loaded into the processor unit (105) by an actuation of the selection keys (41a-41f) of the selection key field (40), whose execution results in that such an allocation can be assigned to the function keys (21) of the function key field (20), that by the actuation of the i^{th} function key (21) a command signal (BF) can be generated, whose execution results in that the processor unit (105) generates a control signal (SB) for the Braille pins (11a-11h) of the Braille elements (11) of the Braille field, said control signal (SB) representing a text in clear of an i^{th} area of a monitor.

9. The device according to claim 8, characterized in that in this first command set a surveillance function is integrated in such a way that by the processor unit (105) a warning signal can be generated, if the area assigned to the actuated function key (21) comprises a defined content.

10. The device according to one of the afore-mentioned claims, characterized in that in the storage component (101) a second command set is stored, which can be loaded into the processor unit (105) by the actuation of a further selection key (41a) of the selection key field (40), whose execution results in that the processor unit (105) generates control signals (SB) for the Braille pins (11a-11h) of the Braille elements (11) of the Braille field (10), by which for each Braille element (11) a positioning of its Braille pins (11a-11h) in accordance with the content of the area assigned to it can be generated.

11. The device according to one of the afore-mentioned claims, characterized in that in the storage component (101) of the control means (100) of the device (1) a third command set is stored, which can be loaded into the processor unit (105) by the actuation of a further selection key (41d) of the selection key field, which results in that by the processor unit (105) a control signal (SS) for the Braille pins (11a-11h) of at least one of the Braille elements (31a-31e) of the status field (30) can be generated.

12. The device according to one of the afore-mentioned claims, characterized in that in the storage component (101) of the control means (100) of the device (1) a fourth command set is stored, which can be loaded into the processor unit (105) by the actuation of a further selection key (41f) of the selection key field (40), which results in that for a selected fourth command set the processor unit (105) generates control signals (SB) for the Braille pins (11a-11h) of the Braille elements (11) of the Braille field (10), which represent attributes and/or informations of the area of the monitor selected by the actuation of the i^{th} function key (21) of the function key field (20).

13. The device according to one of the afore-mentioned claims, characterized in that in the storage component (101) of the control means (100) of the device (1) a fifth command set is stored, which can be loaded into the processor unit (105) by the actuation of a selection key (41b), which results in that the processor unit (105) generates control signals, which represent the attributes of an area of the monitor which is not selected currently.

14. The device according to one of the afore-mentioned claims, characterized in that in the storage component (101) of the control means (100) of the device (1) a sixth command set is stored, which can be loaded into the processor unit (105) by the actuation of a selection key (42d) of the selection key field, by which a key allocation can be assigned to the function keys (21) of the function key field (20), which results in that the content of an area of the monitor assigned to this function key can be stored in the storage component (101) by an actuation of the i^{th} function key.

15. The device according to claim 14, characterized in that the sixth command set contains a command sequence, which results in that by the processor unit (105) a control signal (SS) for the Braille pins (11a-11h) of the Braille elements (31a-31e) of the status field (30) can be produced, which represents the areas of the monitor loaded in the storage component (101).

16. The device according to one of the afore-mentioned claims, characterized in that the device (1) comprises a help system, which can be activated by actuation of a selection key (41a) of the selection key field (40).

17. The device according to one of the afore-mentioned claims, characterized in that the device (1) comprises a further key field (60), by which a sequential call of the mₛ command sets stored in the storage component (101) of the control means (100) can be executed.

18. The device according to one of the afore-mentioned claims, characterized in that the device (1) comprises an operation field (50) for a speech recorder.

19. Method for controlling the position of Braille pins (11a-11h) of at least one Braille element (11) of a Braille field (10), in which control means (100) with a storage component (101) and a processor unit (105) and a function key field (20) comprising m function keys (21) are provided, in which a command signal (BE) triggered by an actuation of at least one of the m function keys (21) of the function key field (20) is communicated to the processor unit (105), characterized in that in the storage component (101) of the control means (100) a number of s command sets is stored, by which a defined key allocation is assigned to mₛ of the m function keys (21) of the function key field (20), respectively, that by the actuation of at least one selection key (41a-41f;42) of a selection key field (40) a command signal (BA) is generated, which can be communicated to the processor unit (105), by which a particular command set is assigned to the function keys (21) of the function key field (20), in which by an actuation of at least one of the mₛ function keys (21) of the function key field (20) a command signal (BS, BA) is triggered, that the execution of the function currently correlated with the actuated function key (21) of the particular one of the mₛ command sets stored in the storage component (101) loaded in the processor unit (105) is initiated, and that the processor unit (105) generates a control signal for the Braille pins (11a-11h) of at least one of the Braille elements (11) of the Braille field (10) correlated with the result of the function execution thus initiated.

## Revendications

1. Dispositif pour le réglage automatique de la position de broches (11a-11h) d'écriture en braille d'au moins un élément (11) d'écriture en braille d'un champ (10) d'écriture en braille, qui présente un mécanisme de commande (100) comprenant un composant de mémoire (101) et une unité de processeur (105), l'unité de processeur (105) étant reliée via une ligne pilote (110) à des fins de transmission de signaux de commande (SB) par lesquels la position des broches (11a-11h) d'écriture en braille des éléments (11) d'écriture en braille du champ (10) d'écriture en braille est réglable et présentant un champ (20) de touches de fonction comprenant un nombre m de touches de fonction (21), relié via une ligne pilote supplémentaire (120) au mécanisme de commande (100), des signaux d'instruction (BE) émis en actionnant au moins une des m touches de fonction (21) du champ de touches de fonction (20) pouvant être transférée via la ligne pilote supplémentaire (120) à l'unité de processeur (105), caractérisé en ce qu'un nombre s de phrases d'instruction peuvent être mémorisées dans le composant de mémoire (101) du mécanisme de commande (100), par lesquelles respectivement une disposition de touches définie peut être attribuée à respectivement de mₛ touches de fonction parmi les touches de fonction (21) du champ de touches de fonction (20); en ce que le dispositif (1) présente un champ de touche de sélection (40) comprenant au moins une touche de sélection (41a-41f; 42); en ce que, en actionnant au moins une des touches de sélection (41a-41f; 42) du champ de touches de sélection (40), on peut obtenir un signal d'instruction (BA) qui peut être transféré à l'unité de processeur (105), par lequel la phrase d'instruction, qui est attribuée à la touche ou aux touches de sélection actionnées (41a-41f; 42) du champ de touches de sélection (40), peut être chargée, si bien qu'un signal d'instruction (BS, BA) déclenché par l'actionnement d'au moins une des m touches de fonction (21) du champ de touches de fonction (20) initialise la mise en oeuvre de la fonction actuellement corrélée à la touche de fonction enfoncée (21), de la phrase d'instruction respectivement chargée dans l'unité de processeur (105), les mₛ phrases d'instruction mémorisées dans le composant de mémoire (101); et en ce que l'unité de processeur (105) génère un signal de commande corrélé avec le résultat du déroulement fonctionnel initialisé de cette manière, pour les broches (11a-11h) d'écriture en braille d'au moins un des éléments (11) d'écriture en braille du champ (10) d'écriture en braille.

2. Dispositif selon la revendication 1, caractérisé en ce que le champ de touches de sélection (40) présente au moins une touche de sélection (41a-41f) qui, lorsqu'on appuie dessus, met en oeuvre une correspondance directe d'une phrase d'instruction déterminée des mₛ phrases d'instruction mémorisées dans le composant de mémoire (101) du mécanisme de commande (100) avec les touches de fonction (21) du champ de touches de fonction (20).

3. Dispositif selon la revendication 2, caractérisé en ce que les phrases d'instruction qui ont été corrélées avec une touche de sélection (41a-41f; 42) du champ de touches de sélection (40), par laquelle on peut mettre en oeuvre une correspondance directe de fonctions avec une touche de fonction (21) du champ de touches de fonction (20), sont rassemblées dans le composant de mémoire (101) du mécanisme de commande (100) dans un premier groupe de phrases d'instruction.

4. Dispositif selon revendication 1, caractérisé en ce que le champ de touches de sélection (40) présente au moins une touche de sélection supplémentaire (42) qui, lorsqu'on appuie dessus, met en oeuvre une phrase d'instruction mémorisée dans le composant de mémoire (101) de l'unité de commande (100), par laquelle on peut mettre en correspondance avec au moins une des touches de fonction (21) du champ de touches de fonction (20), une disposition telle qu'en appuyant sur une ou plusieurs touches de fonction (21) du champ de touches de fonction (20), on peut charger dans l'unité de processeur (105) au moins une phrase d'instruction d'un deuxième groupe de phrases d'instruction parmi les mₛ phrases d'instruction mémorisées dans le composant de mémoire (101).

5. Dispositif selon revendication 4, caractérisé en ce que, via l'unité de processeur (5), on peut générer un signal de commande pour les broches (11a-11h) d'écriture en braille des éléments (11) d'écriture en braille du champ (10) d'écriture en braille, caractérisant la disposition des touches de fonction (21) du champ de touches de fonction (20), déclenchée par le fait d'appuyer sur les touches de sélection supplémentaires (42) du champ de touches de sélection (40).

6. Dispositif selon l'une quelconque des revendications précédentes, caractérisé en ce que le dispositif (1) présente un champ de statut (30) présentant au moins une touche de statut (32a-32e) qui peut être reliée via une ligne de signalisation (130) à l'unité de processeur (105).

7. Dispositif selon revendication 6, caractérisé en ce qu'un élément (31a-31e) d'écriture en braille est attribué à au moins une touche de statut (32a-32e) du champ de statut (30).

8. Dispositif selon l'une quelconque des revendications précédentes, caractérisé en ce que, dans le composant de mémoire (101) du mécanisme de commande (100) du dispositif (1), on mémorise une première phrase d'instruction qui peut être chargée dans l'unité de processeur (105) en appuyant sur les touches de sélection (41a-41f) du champ de touches de sélection (40), dont la mise en oeuvre faite en sorte que l'on peut attribuer aux touches de fonction (21) du champ de touches de fonction (20) une disposition telle qu'en enfonçant la ième touche de fonction (21), on génère un signal d'instruction (BF) dont la mise en oeuvre faite en sorte que l'unité de processeur (105) génère un signal d'instruction (SB) pour les broches (11a-11h) d'écriture en braille des éléments (11) d'écriture en braille du champ d'écriture en braille, qui représente un texte en clair d'une ième zone d'un moniteur.

9. Dispositif selon la revendication 8, caractérisé en ce qu'une fonction de surveillance est intégrée dans cette première phrase d'instruction de telle sorte qu'un signal d'avertissement peut être généré via l'unité de processeur (105) lorsque la zone attribuée à la touche de fonction enfoncée (21) présente un contenu défini.

10. Dispositif selon l'une quelconque des revendications précédentes, caractérisé en ce que, dans le composant de mémoire (101), on mémorise une deuxième phrase d'instruction qui peut être chargée dans l'unité de processeur (105) en appuyant sur une touche de sélection supplémentaire (41a) du champ de touches de sélection (40), dont la mise en oeuvre fait en sorte que l'unité de processeur (105) génère des signaux de commande (SB) pour les broches (11a-11h) d'écriture en braille des éléments (11) d'écriture en braille du champ (10) d'écriture en braille par lesquels dans chaque élément (11) d'écriture en braille, un positionnement de ses broches 11a-11h d'écriture en braille peut être obtenu, qui caractérise le contenu de la zone qui lui a été attribuée.

11. Dispositif selon l'une quelconque des revendications précédentes, caractérisé en ce que, dans le composant de mémoire (101) du mécanisme de commande (100) du dispositif (1), on mémorise une troisième phrase d'instruction qui peut être chargée en appuyant sur une touche de sélection supplémentaire (41d) du champ de touches de sélection, fait en sorte que l'unité de processeur (105) génère un signal de commande (SS) pour les broches (11a-11h) d'écriture en braille d'au moins un élément (31a-31e) d'écriture en braille du champ de statut (30).

12. Dispositif selon l'une quelconque des revendications précédentes, caractérisé en ce que, dans le composant de mémoire (101) du mécanisme de commande (100) du dispositif (1), on mémorise une quatrième phrase d'instruction qui peut être chargée en appuyant sur une touche de sélection supplémentaire (41f) du champ de touches de sélection (40), qui fait en sorte que, lors de la sélection de la quatrième phrase d'instruction, l'unité de processeur (105) génère des signaux de commande (SB) pour les broches (11a-11h) d'écriture en braille des éléments (11) d'écriture en braille du champ (10) d'écriture en braille, qui représentent des attributs et/ou des informations du domaine du moniteur sélectionné par le fait d'appuyer sur la ième touche de fonction (21) du champ de touches de fonction (20).

13. Dispositif selon l'une quelconque des revendications précédentes, caractérisé en ce que, dans le composant de mémoire (101) du mécanisme de commande (100) du dispositif (1), on mémorise une cinquième phrase d'instruction qui peut être chargée dans l'unité de processeur (105) en appuyant sur une touche de sélection (41b), qui fait en sorte que l'unité de processeur (105) génère des signaux de commande qui représentent les attributs d'une zone du moniteur qui ne fait pas l'objet d'une sélection actuelle.

14. Dispositif selon l'une quelconque des revendications précédentes, caractérisé en ce que, dans le composant de mémoire (101) du mécanisme de commande (100) du dispositif (1), on mémorise une sixième phrase d'instruction qui peut être chargée dans l'unité de processeur (105) en appuyant sur une touche de sélection (42d) du champ de touche de sélection, par laquelle une disposition de touches peut être attribuée aux touches de fonction (21) du champ de touches de fonction (20), qui fait en sorte que, en appuyant sur la ième touche de fonction, le contenu d'une zone du moniteur attribuée à cette touche de fonction peut être mémorisé dans le composant de mémoire (101).

15. Dispositif selon la revendication 14, caractérisé en ce que, la sixième phrase de l'instruction contient une séquence d'instruction qui fait en sorte qu'un signal de commande (SS) pour les broches (11a-11h) d'écriture en braille des éléments (31a-31e) d'écriture en braille du champ de statut (30) peut être généré par l'unité de processeur (105), le signal représentant les zones du moniteur chargées dans le composant de mémoire (101).

16. Dispositif selon l'une quelconque des revendications précédentes, caractérisé en ce que, le dispositif (1) présente un système auxiliaire qui peut être activé en appuyant sur une touche de sélection (41a) du champ de touches de sélection (40).

17. Dispositif selon l'une quelconque des revendications précédentes, caractérisé en ce que le dispositif (1) présente un champ de touches supplémentaires (60) par lequel on peut mettre en oeuvre un appel séquentiel des mₛ phrases d'instruction mémorisées dans le composant de mémoire (101) du mécanisme de commande (100).

18. Dispositif selon l'une quelconque des revendications précédentes, caractérisé en ce que le dispositif (1) présente un champ de manipulation (50) pour un enregistreur vocal.

19. Procédé pour le réglage automatique de la position de broches (11a-11h) d'écriture en braille d'au moins un élément (11) d'écriture en braille d'un champ (10) d'écriture en braille, dans lequel on prévoit un mécanisme de commande (100) comprenant un composant de mémoire (101) et une unité de processeur (105), ainsi qu'un champ de touches de fonction (20) présentant m touches de fonction (21), dans lequel un signal d'instruction (BE) déclenché en appuyant sur au moins une touche parmi les m touches de fonction (21) du champ de touches de fonction (20) est transmis à l'unité de processeur (105), caractérisé en ce qu'on mémorise un nombre de s phrases d'instruction dans le composant de mémoire (101) du mécanisme de commande (100) par lesquelles une disposition de touches définie est attribuée à respectivement mₛ touches respectives des m touches de fonction (21) du champ de touches de fonction (20); en ce qu'un signal d'instruction (BA) qui peut être transmis à l'unité de processeur (105) est généré en appuyant sur au moins une touche de sélection (41a-41f; 42) d'un champ de touches de sélection (40), signal par lequel, une phrase d'instruction déterminée est attribuée aux touches de fonction (21) du champ de touche de fonction (20) par laquelle, en appuyant sur au moins une touche parmi les mₛ touches de fonction (21) du champ de touche de fonction (20), on déclenche un signal d'instruction (BS, BA); en ce qu'on initialise la mise en oeuvre de la fonction actuellement corrélée avec la touche de fonction enfoncée (21), de la phrase d'instruction respective chargée dans l'unité de processeur (105); parmi les mₛ phrases d'instruction mémorisées dans le composant de mémoire (101), et en ce que l'unité de processeur (105) génère un signal de commande corrélé avec le résultat du déroulement fonctionnel initialisé de cette manière, pour les broches (11a-11h) d'écriture en braille d'au moins un des éléments (11) d'écriture en braille du champ (10) d'écriture en braille.
